# EUROPÄISCHE PATENTSCHRIFT

(11) **EP 4 078 499 B1**
(45) Veröffentlichungstag und Bekanntmachung des Hinweises auf die Patenterteilung: **20.05.2026**
(21) Anmeldenummer: 20833801.2
(22) Anmeldetag: 16.12.2020
(51) Int. Cl.: G06Q 30/06

(54) **VERFAHREN ZUR RÜCKGABE EINES KLEINFAHRZEUGS AN EINER BASISSTATION DURCH EINEN NUTZER DES KLEINFAHRZEUGS**
METHOD FOR THE RETURN OF A SMALL VEHICLE AT A BASE STATION BY A USER OF THE SMALL VEHICLE
PROCÉDÉ DE RETOUR DE PETIT VÉHICULE À UNE STATION DE BASE PAR UN UTILISATEUR DU PETIT VÉHICULE

(30) Priorität: 18.12.2019 DE 102019135023
(43) Veröffentlichungstag der Anmeldung: 26.10.2022
(73) Patentinhaber: Waterman Charging System GmbH, 10707 Berlin (DE)
(72) Erfinder: KUECKENS, Helmut, 10625 Berlin (DE); REINHOLD, Martin, 28329 Bremen (DE)
(74) Vertreter: Kohlhof, Stephan
(86) Internationale Anmeldenummer: PCT/EP2020/086593
(87) Internationale Veröffentlichungsnummer: WO 2021/122861

(56) Entgegenhaltungen:
- WO-A1-2019/148123

## Beschreibung

Die Erfindung betrifft ein Verfahren zur Rückgabe eines Kleinfahrzeugs an einer Basisstation durch einen Nutzer des Kleinfahrzeugs.

Derzeit werden sog. Verleih e-scooter/e-bikes in großer Anzahl in öffentlichem Verkehrsraum abgestellt. Die Rückgabe erfolgt dabei ohne mechanische Verriegelung an einer örtliche definierten Basisstation; vielmehr werden die Fahrzeuge nach der Rückgabe anhand einer Wegfahrsperre für eine Weiternutzung gesperrt. Dabei werden diese Fahrzeuge häufig nicht sachgerecht abgestellt, sie lassen sich in Bäumen und Gewässern wiederfinden oder werden verkehrsbehindernd abgestellt. Es ist damit zu rechnen, dass einige Kommunen diese Art des Verleihens deutlich stärker reglementieren werden. Zudem ist aufgrund eines unsachgemäßen Handlings für das Aufladen und das Abstellen die durchschnittliche Lebensdauer solcher Fahrzeuge teilweise auf wenige Monate begrenzt.

Unsachgemäß abgestellte Kleinfahrzeuge stellen aber auch eine unmittelbare Gefahrenquelle dar. So können insbesondere sehbehinderte Menschen leicht über auf dem Boden liegende Fahrzeuge stolpern.

Die WO 2019/148123 A1 offenbart ein Verleihsystem, bei dem ein ausgeliehenes Surfbrett an einer ortsfesten Dockingstation 200 zurückgegeben werden kann. Die Dockingstation verfügt über ein Lesegerät, welches ein individuelles Surfbrett beispielsweise mittels RFID identifizieren kann. Über ein Schließelement kann das Surfbrett mit der Dockingstation mechanisch verriegelt werden, um so eine missbräuchliche Nutzung zu verhindern.

Die US 2019 0071143 A1 offenbart ein Leihfahrrad, das mit einem Verriegelungssystem ausgestattet ist. Dieses umfasst eine Art Lenkradsperre.

Die US 2019 0071144 A1 sowie die US 2015/0074004 A1 offenbaren ein Fahrrad-Verleihsystem, bei dem die Fahrräder jeweils mechanisch an einer Basisstation angeschlossen werden.

Die DE 10 2016 204 295 A1 offenbart ein System zur Standortermittlung eines Mietfahrzeugs, mit einer ortsfesten Station, welche einen Signalgeber umfasst. Der Signalgeber empfängt ein von dem Mietobjekt ausgesendeten Anforderungssignal und sendet eine die ortsfeste Station identifizierende Stationskennung aus.

Es ist Aufgabe der Erfindung, eine verbesserte Möglichkeit zum Abstellen von Kleinfahrzeugen insbesondere im öffentlichen Raum bereitzustellen. Dies wird gelöst durch ein Verfahren nach dem Hauptanspruch; Ausgestaltungen sind Gegenstand der Unteransprüche sowie der Beschreibung.

Dabei ist im Rahmen der Rückgabe des Kleinfahrzeugs ein erster Identifikator an der Basisstation zu scannen. Damit kann sichergestellt werden, dass zumindest der Nutzer sich an der Basisstation befindet.

Dabei werden die Identifikatoren an der Basisstation und am Fahrzeug gescannt. Dies hat innerhalb einer gewissen Zeitvorgabe zu geschehen. Auf diese Weise wird sichergestellt, dass auch das Fahrzeug sich zumindest zum Zeitpunkt der Rückgabe an der Basisstation befindet.

In einer Ausgestaltung erfolgt eine mechanische Interaktion des Fahrzeugs mit der Basisstation. Die Interaktion kann vielfältig ausgebildet sein. Allerdings bedingt diese Interaktion, dass der erste Identifikator an der Basisstation überhaupt erst scanbar wird. Ohne entsprechende Interaktion verbleibt der erste Identifikator verborgen und kann nicht gescannt werden.

Insgesamt kann eine geeignete Basisstation ohne Bereitstellung von Energie betrieben werden. Damit sind solche Basisstation in großer Menge günstig bereitstellbar.

Ohne Scan des ersten Identifikators ist insbesondere eine Rückgabe ausgeschlossen.

Die Rückgabe kann insbesondere ohne mechanische Verriegelung erfolgen. Ein unbefugtes Entfernen / Bewegen kann durch einen Alarmmechanismus am Fahrzeug erschwert werden. Der Alarmmechanismus kann ausgelöst werden, sobald eine Bewegung des Fahrzeugs erkannt wird. Die Bewegung des Fahrzeugs kann beispielsweise durch einen Beschleunigungssensor ausgelöst werden. Alternativ kann die Bewegung des Fahrzeugs durch eine Positionserkennung insbesondere anhand einer GPS-Einheit erkannt werden. In einem Zeitraum, in dem das Bewegen des Fahrzeugs unbefugt ist, kann eine Bremse des Fahrzeugs aktiviert sein.

Der Begriff Kleinfahrzeug kann insbesondere wie folgt ersetzt werden: Fahrzeug, welches zur Nutzung von genau einer Person vorgesehen ist, und/oder Zweiradfahrzeug.

Die Erfindung wird anhand der Figuren nachfolgend näher erläutert; hierin zeigt
- Figur 1: eine für das beanspruchte Verfahren geeignete Rückgabestationsanordnung;
- Figur 2: ein Mobiltelefon mit zwei Identifikatoren der Rückgabestationsanordnung;
- Figur 3: schematisch Details der Rückgabestationsanordnung während eines Rückgabevorgangs, wobei das Innere der Basisstation sichtbar ist;
- Figur 4: schematisch Details der Rückgabestationsanordnung während des Rückgabevorgangs, wobei das Innere der Basisstation verdeckt ist.

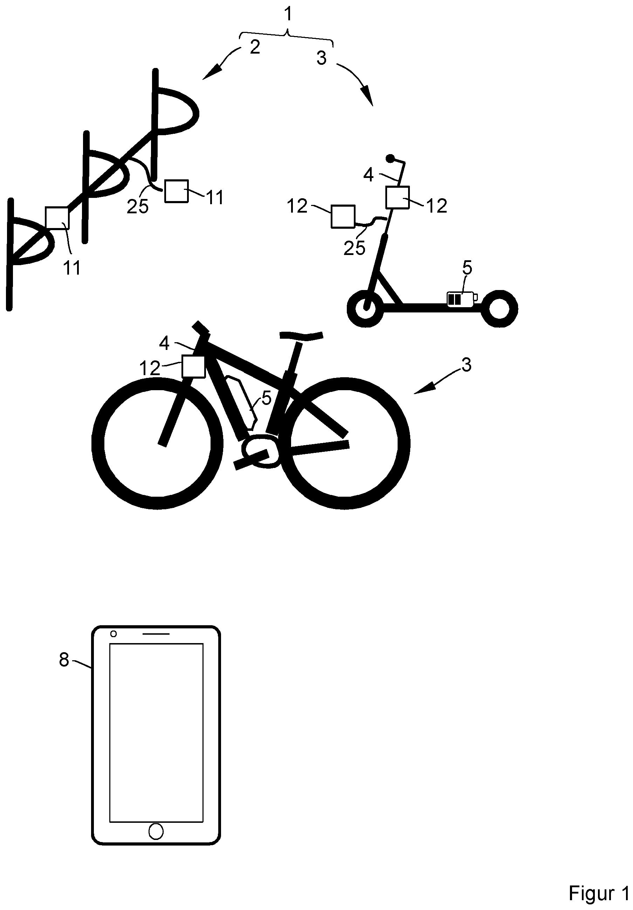

Figur 1 zeigt eine Rückgabestationsanordnung 1, welche eine Basisstation 2 und ein Elektrokleinfahrzeug 3 umfasst. Das Elektrokleinfahrzeug 3 umfasst einen aufladbaren Akkumulator 5. Das Elektrokleinfahrzeug 3 kann ein Roller oder ein Fahrrad sein. Die Erfindung ist aber auch anwendbar bei solchen Kleinfahrzeugen, die ohne Elektromotor und damit ohne Akkumulator betrieben werden. Die nachfolgende Beschreibung steht stellvertretend für sämtliche derartige Fahrzeuge.

An der Basisstation 2 ist ein erster maschinenlesbarer Identifikator 11 angebracht. Ein solcher Identifikator kann ein QR-Code sein.

Das Elektrokleinfahrzeug 3 wurde von einem Nutzer ausgeliehen und soll nun an der Basisstation 2 zurückgegeben werden. Auf einem Mobiltelefon 5, das im Besitz des Nutzers ist, läuft eine App, die von einem Verleihanbieter betrieben wird. Während des Rückgabevorgangs scannt der Nutzer den ersten Identifikator 11 an der Basisstation mit dem Mobiltelefon 5. Durch den Scan liefert der Nutzer den Nachweis, dass sich der Nutzer am Ort der Basisstation befindet. In der App ist die Nutzung des Elektrokleinfahrzeugs 3 mit dem Nutzer verknüpft. Über eine Datenverbindung wird nun das verknüpfte Elektrokleinfahrzeug 3 in einen Sperrzustand überführt, in welchem eine Nutzung des Fahrzeugs verhindert ist.

Auf diese Weise kann vermieden werden, dass das Elektrokleinfahrzeug 3 an irgendeinem Ort abgestellt.

In einer weiteren Ausgestaltung kann die Sicherheit der ortsgebundenen Rückgabe erhöht werden. Dazu ist am Elektrokleinfahrzeug 3 ein zweiter Identifikator 12 angeordnet. Beim Rückgabevorgang ist es erforderlich, dass der Nutzer durch das Mobiltelefon 8 sowohl den ersten Identifikator 11 als auch den zweiten Identifikator 12 innerhalb einer vordefinierten Zeitspanne (z.B. innerhalb von 5 Sekunden) scannt. Damit kann nachgewiesen werden, dass beim Rückgabevorgang neben dem Mobiltelefon 8 auch das Elektrokleinfahrzeug 3 selbst am Ort der Basisstation 2 angeordnet ist.

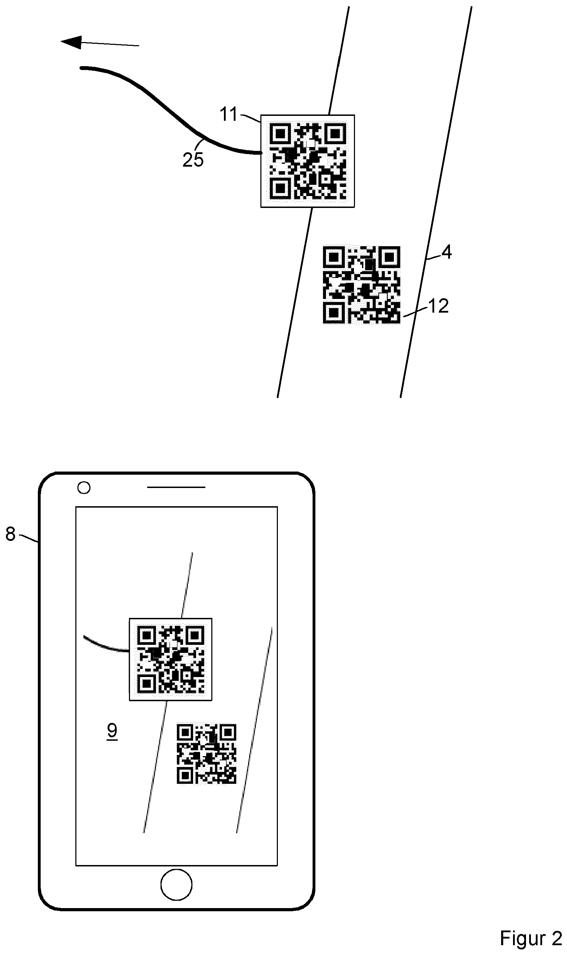

In einer Ausgestaltung sind die beiden Identifikatoren 11, 12 jeweils als QR-Codes ausgebildet und so an der Basisstation bzw. an dem Elektrokleinfahrzeug 3 angeordnet, dass beide insbesondere gleichzeitig durch das Mobiltelefon 8 gescannt werden können. So ist es denkbar, dass ein gemeinsamer Scan 9, hier in Form eines Bildes, beider Identifikatoren 21, 22 erzeugt wird, wie Figur 2 zeigt. Der Scan 9 kann nun elektronisch ausgewertet werden. Diese Auswertung liefert insbesondere eine Zuordnung zwischen dem Elektrokleinfahrzeug und dem Rückgabeort. Die Auswertung kann vollautomatisch ablaufen.

Einer der Identifikatoren 11, 12 kann an einer Sicherungsleine 25 mit der Basisstation 2 oder mit dem Elektrokleinfahrzeugs 3. Der Begriff Sicherungsleine ist dabei recht weit zu verstehen und umfasst Stahlseile, Ketten, ein Schubgliederband, ein Schwanenhals, ein Federzug oder sonstige Einrichtungen die eine Beweglichkeit innerhalb eines vorbestimmten Wirkradius von insbesondere weniger als 1m um die Basisstation 2 herum ermöglichen, zugleich aber einem unbefugten Entfernen des jeweiligen Identifikators aus diesem Wirkradius entgegenwirken. Durch die Beweglichkeit zumindest eines der Identifikatoren 11, 12 wird es dem Nutzer einfach gemacht, die beiden Identifikatoren 11, 12 derart nah zueinander zu positionieren, dass diese innerhalb der Zeitvorgabe, insbesondere gleichzeitig gescannt werden können.

Eine gewisse Stabilität der Sicherungsleine, insbesondere in Form eines Schwanenhalses ist dabei bevorzugt, da der Identifikator dann eine eingestellte Position zumindest kurzzeitig beigehalten kann. Dem Nutzer könnten so beide Hände für das Einscannen der beiden QR-Codes zur Verfügung stehen.

Rein beispielhaft ist im vorliegenden Ausführungsbeispiel der zweite Identifikator 12 an der Lenkstange 4 des Elektrokleinfahrzeugs 3 angebracht und der erste Identifikator über die Sicherungsleine 25 mit der Basisstation verbunden. Durch die Wahl der Länge der Sicherungsleine 25 kann nun sichergestellt werden, dass sich das Elektrokleinfahrzeug innerhalb eines zulässigen Rückgaberaumes befindet. Alternativ oder zusätzlich kann auch der zweite Identifikator über eine Sicherungsleine am Kleinfahrzeug angebracht sein.

Das vorgenannte Verfahren wird in einer möglichen Ausgestaltung durch einen Validierungsschritt abgesichert. Hierbei kann eine mögliche Manipulation aufgedeckt werden. So wäre es denkbar, dass anstelle des Identifikators eine Kopie des Identifikators zum Scan bereitgestellt wird. Denn eine Kopie z.B. eines abfotografierten original QR-Codes lässt sich ohne weiteres über ein Mobiltelefon an einem anderen Ort anzeigen.

In dem Validierungsschritt wird dazu zusätzlich überprüft, ob sich der erste Identifikator 11 an dem Ort des zweiten Identifikators 22 befindet. Dazu wird eine über ein zusätzliches Verfahren die Position des Mobiltelefons oder des Fahrzeugs ermittelt. Dies kann anhand einer elektronische Positionserfassungsfunktionalität des Mobiltelefons und/der des Fahrzeugs erfolgen. Die Positionserfassung kann anhand von GPS oder anhand von in der Umgebung vorhandenen Netzwerken oder Mobilfunkzellen erfolgen. Die Position des ersten Identifikators 11 kann in einer Datenbasis hinterlegt sein und für den Validierungsschritt abgefragt werden. Die so ermittelte Position wird nun mit der hinterlegten Position verglichen. Sollte es zu einer signifikaten Abweichung, insbesondere oberhalb einer tolerierten Abweichung, kommen, so kann eine Fehlermeldung ausgegeben werden und/oder das Rückgabeverfahren kann nicht abgeschlossen werden. Eine tolerierte Abweichung kann in Abhängigkeit der Messgenauigkeit der jeweils verwendeten Positionserfassungsfunktionalität festgelegt werden.

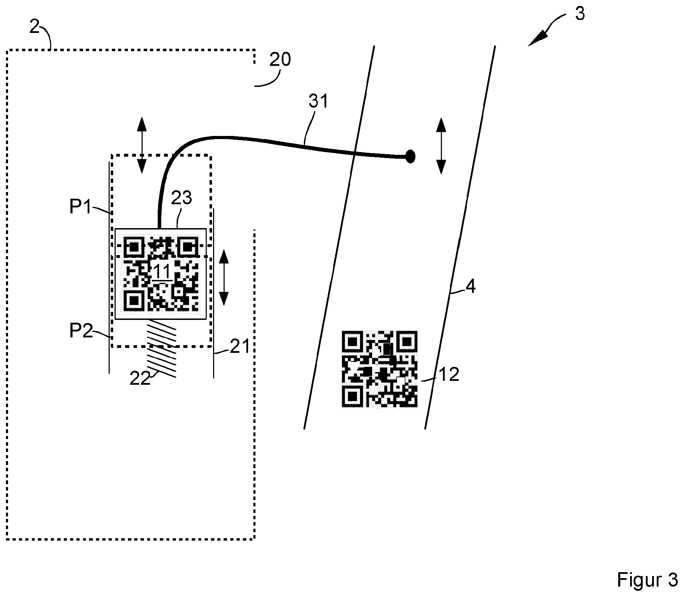

Figur 3 zeigt eine weitere Ausgestaltung. Hier wird anhand eines Mechanismus sichergestellt, dass der erste Identifikator 11 nur dann scanbar ist, wenn das Elektrokleinfahrzeug 3 in mechanischer Verbindung mit der Basisstation 2 steht.

Der erste Identifikator 11 ist hierbei beweglich an der Basisstation 2 angebracht und ist anhand einer Führung 21 definiert überführbar zwischen einer ersten Position P1 und einer zweiten Position P1. Ein Rücksteller 22 beaufschlagt den ersten Identifikator 11 standardmäßig in die erste Position P1. Der Rücksteller kann durch eine Federkraft oder durch Gewichtskraft betrieben werden.

Am Elektrokleinfahrzeug 3 ist ein Mitnehmer 31 angeordnet, der bei einem Rückgabevorgang insbesondere in eine Einführöffnung 20 eingeführt wird und dort mit einem Gegenstück 23 zum Mitnehmer an der Basisstation 2 interagiert. Der Mitnehmer 31 ist nun derart angeordnet, dass dieser bei einem Absenken des Elektrokleinfahrzeugs 3 den ersten Identifikator 11 entgegen der Beaufschlagung durch den Rücksteller 22 aus der ersten Position P1 in die zweite Position P2 verlagert.

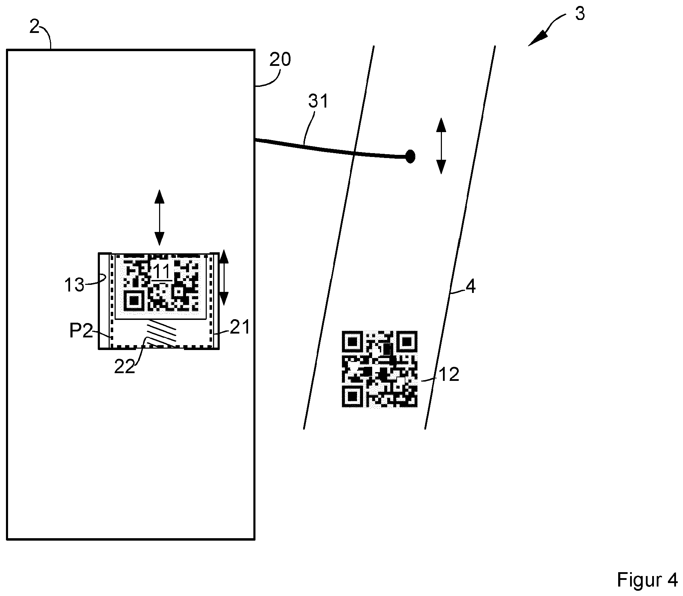

Figur 4 zeigt die Situation von außen. An der Basisstation 2 ist ein Scanfenster 13 angeordnet, welches in Überlagerung mit der zweiten Position P2 ist und einen Scanzugang in zu dem ersten Identifikator 11 freigibt, wenn sich dieser in der zweiten Position P2 befindet.

In diesem Fall kann auf das Erfassen des zweiten Identifikators 12 verzichtet werden, da der erste Identifikator nur dann scanbar ist, wenn das Elektrokleinfahrzeug 3 in mechanischer Wirkverbindung mit der Basisstation ist.

Nun könnte der Nutzer diesen Mechanismus austricksen und an der Basisstation den ersten Identifikator 11 scannen, an dem bereits ein anderes Elektrokleinfahrzeug angeordnet ist, da dieser Identifikator ja sichtbar ist. Allerdings ist diesem Identifikator bereits ein anderes Kleinfahrzeug zugeordnet; somit ist dieser erste Identifikator 11 für eine weitere Rückgabe gesperrt, bis dieses andere Elektrokleinfahrzeug wieder ausgeliehen wurde.

In einer Abwandlung, die nicht explizit dargestellt ist, ist nicht der erste Identifikator verschiebbar zwischen der ersten und der zweiten Position; vielmehr ist der erste Identifikator unbeweglich an der zweiten Position P2 angeordnet. Stattdessen ist das Scanfenster 13 verlagerbar, insbesondere verschiebbar oder verdrehbar, zwischen einer ersten Position P1 und der zweiten Position P2. Entsprechend ist eine Abdeckung vorgesehen, die den ersten Identifikator 11 verdecken kann. Der Begriff Scanfenster 13 ist breit zu verstehen und bezeichnet einen nicht verdeckenden, ggf. verlagerbaren Bereich, eines Abdeckkörpers. Das Scanfenster muss nicht zwangsläufig umrahmt sein.

Für beide genannten Möglichkeiten gilt insbesondere: Nur wenn sowohl das Sichtfenster 413 als auch der erste Identifikator 11 an der zweiten Position P2 angeordnet sind, ist der erste Identifikator 11 durch das Scanfenster 13 scanbar.

### Bezugszeichenliste

- 1: Rückgabestationsanordnung
- 2: Basisstation
- 3: Elektrokleinfahrzeug
- 4: Lenkstange des Elektrokleinfahrzeugs
- 5: Akkumulator
- 8: Mobiltelefon
- 9: Scan der Identifikatoren

- 11: erster Identifikator
- 12: zweiter Identifikator
- 13: Scanfenster

- 20: Einführöffnung
- 21: Führung
- 22: Rücksteller
- 23: Gegenstück

- 31: Mitnehmer

- P1: erste Position (verdeckt)
- P2: zweite Position (scanbar)
- 25: Sicherungsleine

## Patentansprüche

1. Verfahren zur Rückgabe eines Kleinfahrzeugs (3) an einer Basisstation (2) durch einen Nutzer des Kleinfahrzeugs (3), insbesondere zur Positionserfassung während der Rückgabe, **gekennzeichnet durch** die folgenden Verfahrensschritte:
Überführen des Kleinfahrzeug (3) **durch** den Nutzer in einen vorgegebenen Abstand zu der Basisstation (2),
Erzeugen eines Scans (9) eines ersten Identifikators (11), welcher an der Basisstation (2) angebracht ist, anhand eines Mobiltelefons (8) **durch** den Nutzer,
Erzeugen eines Scans (9) eines zweiten Identifikators (12), welcher an dem Kleinfahrzeug (3) angebracht ist, anhand des Mobiltelefons (8) **durch** den Nutzer, wobei der Scan (9) des zweiten Identifikators (12) und der Scan des ersten Identifikators (11) innerhalb einer Zeitvorgabe zu erfolgen hat, informationstechnische Erfassung und Auswertung der Scans (9),
informationstechnisches Sperren des Kleinfahrzeugs (3) für eine Weiterbenutzung des Kleinfahrzeugs (3) **durch** den Nutzer.

2. Verfahren nach dem vorherigen Anspruch,
**dadurch gekennzeichnet**
**dass** die Zeitvorgabe weniger als 5 sec, insbesondere weniger als 1 Sekunde beträgt.

3. Verfahren nach einem der vorherigen Ansprüche,
**dadurch gekennzeichnet,**
**dass** der Scan (9) des zweiten Identifikators (12) und der Scan des ersten Identifikators (11) gleichzeitig erfolgen.

4. Verfahren nach einem der vorherigen Ansprüche,
**dadurch gekennzeichnet,**
**dass** in einem Validierungsschrittes überprüft wird, ob sich der zweite Identifikator (12) am Ort des ersten Identifikators (11) befindet.

5. Verfahren nach einem der vorherigen Ansprüche,
**dadurch gekennzeichnet,**
**dass** die Position des Mobiltelefons und/oder des Fahrzeugs anhand einer Positionserfassungsfunktionalität des Mobiltelefons bzw. des Fahrzeugs ermittelt wird, und dass die ermittelte Position des Mobiltelefons und/oder des Fahrzeugs mit einer hinterlegten Position des ersten Identifikators verglichen wird.

6. Verfahren nach einem der vorherigen Ansprüche,
**dadurch gekennzeichnet,**
**dass** das Bereitstellen des ersten Identifikators (11) keine Energiebereitstellung durch die Basisstation (2) erfordert.

7. Verfahren nach einem der vorherigen Ansprüche,
**dadurch gekennzeichnet,**
**dass** der erste Identifikator (11) und/oder der zweite Identifikator (12) einen QR-Code umfasst.

8. Verfahren nach einem der vorherigen Ansprüche,
**dadurch gekennzeichnet,**
**dass** vor der Rückgabe die Basisstation (2) in einem Zustand ist, in dem der erste Identifikator (11) von dem Mobiltelefon (8) nicht scannbar ist,
**dass** durch mechanische Interaktion des Kleinfahrzeugs (3) mit der Basisstation (2) die Basisstation in einen zweiten Zustand überführt wird, in dem der erste Identifikator (11) durch das Mobiltelefon (8) scanbar ist.

9. Verfahren nach dem vorherigen Anspruch,
**dadurch gekennzeichnet,**
**dass** im ersten Zustand die Basisstation (2) den ersten Identifikator (11) verdeckt, so dass der Scan des ersten Identifikators durch das Mobiltelefon (8) verhindert wird, und
**dass** im zweiten Zustand die Basisstation (2) den ersten Identifikator (11) freigibt, so dass der Scan des ersten Identifikators durch das Mobiltelefon (8) ermöglicht ist,
insbesondere dass im zweiten Zustand ein Scanfenster (13) in Überlappung mit dem ersten Identifikator (11) ist, wobei der erste Identifikator (11) durch das Scanfenster hindurch scanbar ist.

10. Verfahren nach dem vorherigen Anspruch,
**dadurch gekennzeichnet,**
**dass** im ersten Zustand das Scanfenster (13) und der erste Identifikator (11) in jeweils unterschiedlichen Positionen (P1, P2) angeordnet sind,
**dass** im zweiten Zustand das Scanfenster (13) und der erste Identifikator (11) in jeweils einander entsprechenden Positionen (P2) angeordnet ist.

11. Verfahren nach einem der vorherigen Ansprüche,
**dadurch gekennzeichnet,**
**dass** der erste Identifikator (11) durch den Rückgabevorgang informationstechnisch gesperrt wird für die Rückgabe eines weiteren Kleinfahrzeugs (3),
insbesondere dass die Sperrung des ersten Identifikators (11) informationstechnisch aufgehoben wird, sobald das Kleinfahrzeug (3) erneut ausgeliehen wird.

12. Verfahren nach einem der vorherigen Ansprüche
**dadurch gekennzeichnet,**
**dass** der erste Identifikator (11) anhand einer Sicherungsleine (25) beweglich mit der Basisstation verbunden ist und/oder dass der zweite Identifikator (12) anhand einer Sicherungsleine (25) beweglich mit dem Kleinfahrzeug verbunden ist;
insbesondere ist durch die Sicherungsleine (25) sichergestellt, dass während eines gemeinsamen Scans der beiden Identifikatoren (11, 12) sich das Kleinahrzeug (3) in einem vorgegebenen Abstand zur Basisstation befindet.

## Claims

1. Method for returning a small vehicle (3) to a base station (2) by a user of the small vehicle (3), in particular for position detection during the return, **characterized by** the following method steps:
Transfer of the small vehicle (3) by the user into a predetermined distance from the base station (2),
Generation of a scan (9) of a first identifier (11), which is attached to the base station (2), by means of a mobile telephone (8) by the user,
Generation of a scan (9) of a second identifier (12), which is attached to the small vehicle (3), by means of the mobile telephone (8) by the user, wherein the scan (9) of the second identifier (12) and the scan of the first identifier (11) must take place within a time specification;
information technology recording and evaluation of the scans (9),
information technology blocking of the small vehicle (3) for further use of the small vehicle (3) by the user.

2. Method according to the previous claim,
**characterized by the**
that the time specification is less than 5 sec, in particular less than 1 second.

3. Method according to any of the previous claims,
**characterized in that** the scan (9) of the second identifier (12) and the scan of the first identifier (11) are performed simultaneously.

4. Method according to any of the previous claims,
**characterized in**
**that** in a validation step it is checked whether the second identifier (12) is located at the location of the first identifier (11).

5. Method according to any of the previous claims,
**characterized in**
**that** the position of the cell phone and/or of the vehicle is determined using a position detection functionality of the cell phone or of the vehicle, respectively, and that the determined position of the cell phone and/or of the vehicle is compared with a stored position of the first identifier.

6. Method according to any of the previous claims,
**characterized in**
**that** the provision of the first identifier (11) does not require energy provision by the base station (2).

7. Method according to any of the previous claims,
**characterized in**
**that** the first identifier (11) and/or the second identifier (12) comprises a QR code.

8. Method according to any of the previous claims,
**characterized in**
**that** prior to the return, the base station (2) is in a state in which the first identifier (11) is not scannable by the cell phone (8);
in that by mechanical interaction of the small vehicle (3) with the base station (2), the base station is transferred into a second state in which the first identifier (11) is scannable by the cell phone (8).

9. Method according to the previous claim,
**characterized in**
**that** in the first state the base station (2) covers the first identifier (11) so that the scan of the first identifier by the cell phone (8) is prevented, and
in that in the second state the base station (2) exposes the first identifier (11) so that scanning of the first identifier by the mobile telephone (8) is enabled,
in particular in that in the second state a scanning window (13) is in overlap with the first identifier (11), the first identifier (11) being scannable through the scanning window.

10. Method according to the previous claim,
**characterized in**
**that**, in the first state, the scan window (13) and the first identifier (11) are arranged in respectively different positions (P1, P2),
in that, in the second state, the scan window (13) and the first identifier (11) are arranged in respective mutually corresponding positions (P2).

11. Method according to any of the previous claims,
**characterized in,**
**that** the first identifier (11) is blocked in terms of information technology by the return process for the return of a further small vehicle (3),
in particular in that the blocking of the first identifier (11) is removed in terms of information technology as soon as the small vehicle (3) is rente again.

12. Method according to any of the previous claims,
**characterized in**
**that** the first identifier (11) is movably connected to the base station by means of a securing line (25) and/or in that the second identifier (12) is movably connected to the small vehicle by means of a securing line (25);
in particular, the securing line (25) ensures that the small vehicle (3) is located at a predetermined distance from the base station during a joint scan of the two identifiers (11, 12).

## Revendications

1. Procédé de restitution d'un petit véhicule (3) sur une station de base (2) par un utilisateur du petit véhicule (3), en particulier pour la saisie de position pendant la restitution, **caractérisé par** les étapes de procédé suivantes :
transfert du petit véhicule (3) par l'utilisateur à une distance prédéfinie par rapport à la station de base (2),
production d'une numérisation (9) d'un premier identificateur (11), lequel est appliqué à la station de base (2), à l'aide d'un téléphone mobile (8) par l'utilisateur,
production d'une numérisation (9) d'un deuxième identificateur (12), lequel est appliqué au petit véhicule (3), à l'aide d'un téléphone mobile (8) par l'utilisateur, sachant que la numérisation (9) du deuxième identificateur (12) et la numérisation du premier identificateur (11) doivent avoir lieu dans une consigne de temps allouée,
saisie informatique et exploitation de la numérisation (9),
blocage informatique du petit véhicule (3) pour une utilisation ultérieure du petit véhicule (3) par l'utilisateur.

2. Procédé selon la revendication précédente ,
**caractérisé en ce que**
la consigne de temps allouée est inférieure à 5 s, en particulier inférieure à 1 s.

3. Procédé selon l'une quelconque des revendications précédentes,
**caractérisé en ce que**
la numérisation (9) du deuxième identificateur (12) et la numérisation du premier identificateur (11) ont lieu simultanément.

4. Procédé selon l'une quelconque des revendications précédentes,
**caractérisé en ce que**
dans une étape de validation, il est vérifié si le deuxième identificateur (12) se trouve au lieu du premier identificateur (11).

5. Procédé selon l'une quelconque des revendications précédentes,
**caractérisé en ce que**
la position du téléphone mobile et/ou du véhicule est déterminée à l'aide d'une fonctionnalité de saisie de position du téléphone mobile ou du véhicule et **en ce que** la position déterminée du téléphone mobile et/ou du véhicule est comparée à une position mémorisée du premier identificateur.

6. Procédé selon l'une quelconque des revendications précédentes,
**caractérisé en ce que**
la fourniture du premier identificateur (11) n'exige aucune fourniture d'énergie par la station de base (2).

7. Procédé selon l'une quelconque des revendications précédentes,
**caractérisé en ce que**
le premier identificateur (11) et/ou le deuxième identificateur (12) comprend un code de réponse rapide (QR).

8. Procédé selon l'une quelconque des revendications précédentes,
**caractérisé en ce qu'**
avant la restitution, la station de base (2) se trouve dans un état, dans lequel le premier identificateur (11) ne peut pas être numérisé par le téléphone mobile (8) ;
**en ce que** par interaction mécanique du petit véhicule (3) avec la station de base (2), la station de base est transférée dans un deuxième état, dans lequel le premier identificateur (11) peut être numérisé par le téléphone mobile (8).

9. Procédé selon la revendication précédente,
**caractérisé en ce que**
dans le premier état, la station de base (2) couvre le premier identificateur (11), de telle manière que la numérisation du premier identificateur par le téléphone mobile (8) est évitée, et
**en ce que** dans le deuxième état, la station de base (2) libère le premier identificateur (11), de telle manière que la numérisation du premier identificateur par le téléphone mobile (8) est possible,
en particulier **en ce que** dans le deuxième état, une fenêtre de numérisation (13) est en chevauchement avec le premier identificateur (11), sachant que le premier identificateur (11) peut être numérisé à travers la fenêtre de numérisation.

10. Procédé selon la revendication précédente,
**caractérisé en ce que**
dans le premier état, la fenêtre de numérisation (13) et le premier identificateur (11) sont disposés dans des positions (P1, P2) respectivement différentes, et **en ce que** dans le deuxième état, la fenêtre de numérisation (13) et le premier identificateur (11) sont disposés dans des positions (P2) correspondant respectivement l'une à l'autre.

11. Procédé selon l'une quelconque des revendications précédentes,
**caractérisé en ce que**
le premier identificateur (11) est bloqué de manière informatique par l'opération de restitution pour la restitution d'un autre petit véhicule (3),
en particulier, **en ce que** le blocage du premier identificateur (11) est supprimé informatiquement dès que le petit véhicule (3) est à nouveau loué.

12. Procédé selon l'une quelconque des revendications précédentes
**caractérisé en ce que**
le premier identificateur (11) est relié de façon mobile à la station de base à l'aide d'un cordon de sécurité (25) et/ou **en ce que** le deuxième identificateur (12) est relié de façon mobile au petit véhicule à l'aide d'un cordon de sécurité (25),
est en particulier sécurisé par le cordon de sécurité (25), de sorte que pendant une numérisation commune des deux identificateurs (11, 12), le petit véhicule (3) se trouve à une distance prédéfinie par rapport à la station de base.
